# EUROPÄISCHE PATENTSCHRIFT

(11) **EP 1 028 994 B1**
(45) Veröffentlichungstag und Bekanntmachung des Hinweises auf die Patenterteilung: **06.02.2002**
(21) Anmeldenummer: 98947263.4
(22) Anmeldetag: 16.10.1998
(51) Int. Cl.: C08J 7/06

(54) **FOLIENFÖRMIGER PACKSTOFF**
FILM PACKAGING
MATERIAU D'EMBALLAGE SOUS FORME DE FILM

(30) Priorität: 03.11.1997 US 963266
(43) Veröffentlichungstag der Anmeldung: 23.08.2000
(73) Patentinhaber: Alcan Technology & Management AG, 8212 Neuhausen am Rheinfall (CH)
(72) Erfinder: LOHWASSER, Wolfgang, D-78262 Gailingen (DE); FREI, Olaf, CH-8225 Siblingen (CH); MUGGLI, Olivier, Y., A., Louisville, KY 40245 (US)
(86) Internationale Anmeldenummer: CH9800442
(87) Internationale Veröffentlichungsnummer: WO9923141

(56) Entgegenhaltungen:
- EP-A- 0 549 528
- EP-A- 0 622 399
- FR-A- 2 712 310
- KLAUS MÄSCHIG: "Verpackungstechnik: Neue Materialien weich und glasig" TECHNISCHE RUNDSCHAU, Bd. 82, Nr. 36, 7. September 1990, Seiten 64-67, XP000158964
- CHEMICAL ABSTRACTS, vol. 86, no. 26, 27. Juni 1977 Columbus, Ohio, US; abstract no. 191013q, IWASAKI, T. , E.A.: "Polyamide-polyethylene laminated films" XP002085978 & JP 51 048511 B (UNITIKA FILM) 21 Dezember 1976

## Beschreibung

Die Erfindung betrifft einen folienförmigen, für UV-Licht transparenten Packstoff nach dem Oberbegriff von Anspruch 1. Im Rahmen der Erfindung liegt auch ein Verfahren sowie eine Verwendung eines derartigen Packstoffes.

Die Sterilisation von transparenten Produkten durch Bestrahlung mit UV-Licht ist bekannt. So wird heute beispielsweise Trinkwasser mit UV-Licht entkeimt. Auch ist bekannt, dass sich die Haltbarkeit von natürlichen unverarbeiteten Lebensmitteln verlängern lässt, wenn diese mit UV-Licht bestrahlt werden. Die UV-Strahlen können zwar ihre entkeimende Wirkung nur an der Oberfläche eines Lebensmittels entfalten. Ein im wesentlichen unverarbeitetes Lebensmittel ist aber in seinem Inneren steril, so dass zu dessen Entkeimung eine Bestrahlung der Oberfläche ausreicht.

Um ein Produkt steril zu halten, ist es sinnvoll, die Sterilisation in der Produktverpackung durchzuführen, damit nach erfolgter Sterilisation eine Berührung des Verpackungsgutes mit unsterilen Flächen nicht mehr möglich ist.

Die heute bekannten und zur Verpackung von Lebensmitteln eingesetzten Packstoffe haben entweder keine ausreichende Wasserdampf- oder Sauerstoffbarriere, oder sie sind nicht UV-transparent. Insbesondere bei der Verwendung von sehr hochenergetischem (kurzwelligem) UV-Licht, wie es beispielsweise Excimer-Lampen liefern, ist die Auswahl an möglichen Packstoffen mit ausreichender UV-Transparenz sehr eingeschränkt. So ist unter anderem Polyethylenterephtalat (PET) wegen seiner Absorptionskante bei 330 bis 350 nm ebensowenig verwendbar wie Polyvinylidenchlorid (PVDC). Die Auswahl möglicher Packstoffe, die für UV-Licht transparent sind, beschränkt sich damit auf Polyamide (PA) oder Polyolefine wie orientiertes Polypropylen (oPP), Polyethylen (PE), sowie Polymere des Ethylvinylalkohols (EVOH) und Copolymere von Ethylen und EVOH. Mit diesen Materialien sind jedoch oftmals keine ausreichend guten Wasserdampfbarrierewerte erreichbar. Ebenso ist die Gas- und Aromabarriere oft nicht genügend.

Es ist schon festgestellt worden, dass die Barriereeigenschaften von Kunststoffen durch im Vakuumdünnschichtverfahren mittels PVD (physical vapor deposition) - oder CVD (chemical vapor deposition) - Technik aufgebrachte SiOₓ- oder Aluminiumoxidbeschichtungen in gewissen Fällen verbessert werden können. Allerdings ergeben die bisherigen Verfahren und Beschichtungen nur auf PET wesentliche Verbesserungen bezüglich der Durchtrittssperrwirkung von Folien für Wasserdampf und Gase oder die bisher bekanntgewordenen Schichten sind gelblich oder gräulich verfärbt und haben daher im UV-Bereich eine hohe Absorption.

Folienförmige Packstoffe mit einer Trägerfolie aus Kunststoff mit einer Beschichtung aus SiOₓ als Durchtrittssperre für Wasserdampf und Gase sind aus dem Artikel von K. Mäschig, Technische Rundschau, Bd. 82, Nr. 36 (1990), S.64-67, aus der JP-A-76-048511 und aus der EP-A-0 622 399 bekannt.

Der Erfindung liegt daher die Aufgabe zugrunde, einen Packstoff der eingangs genannten Art zu schaffen, der sowohl UV-transparent ist als auch hervorragende Sperreigenschaften für Wasserdampf und Gase aufweist.

Zur erfindungsgemässen Lösung der Aufgabe führen Packstoffe mit den Merkmalen der unabhängigen Ansprüche 1, 3 und 4.

Die Beschichtung einer an sich bekannten UV-transparenten Trägerfolie mit einer keramischen Schicht aus SiOₓ mit der erfindungsgemässen Zusammensetzung und Schichtdicke führt zu einem Packstoff, der neben einer guten UV-Transparenz ausgezeichnete Barriereeigenschaften für Wasserdampf und Gase aufweist.

Bevorzugt ist als Trägerfolie eine orientierte Polypropylenfolie (oPP) mit einer 0,5 bis 2 µm dicken Deckschicht aus einem Copolymer von Ethylen und Propylen mit einem Ethylen-Anteil von 2 bis 5 Mol-%. Diese Variante ergibt ausgezeichnete Wasserdampfbarriereeigenschaften, kombiniert mit sehr guten Sauerstoffbarriereeigenschaften.

Eine Plasma-Vorbehandlung der Trägerfolie vor der SiOₓ-Beschichtung führt zu einer weiteren Verbesserung der Wasserdampf- und Sauerstoffbarriereeigenschaften.

Die mit SiOₓ beschichtete Trägerfolie kann grundsätzlich direkt als Packstoff eingesetzt werden. Zur Steuerung der Siegeleigenschaften kann jedoch die Trägerfolie ein- oder beidseitig mit UV-transparenten Siegelschichten aus beispielsweise PP oder PE beschichtet sein. Die Beschichtung erfolgt bevorzugt mittels Kaschierklebern auf der Basis von Polyurethan. Die Kaschierung mit weiteren UV-transparenten Schichten wie oPA kann zur Verbesserung der mechanischen Festigkeit vorgesehen sein. Die erwähnten weiteren UV-transparenten Schichten, welche mit der SiOₓ-beschichteten Trägerfolie zur Bildung von Packstoffen mit unterschiedlichen Eigenschaften bezüglich mechanischer Festigkeit und Siegelbarkeit kaschiert werden, dürfen keine aromatischen Kohlenwasserstoffe enthalten. Bevorzugt werden deshalb aliphatische Systeme, die eine optimale UV-Durchlässigkeit aufweisen.

Die keramischen Schichten mit SiOₓ können beispielsweise mit Verfahren der Vakuumdünnschichttechnik, bevorzugt durch Elektronenstrahlverdampfen, auf der Trägerfolie abgeschieden werden.

Erfindungsgemäss wird auf die Trägerfolie mittels eines an sich bekannten Vakuumdünnschichtverfahrens durch gleichzeitiges Verdampfen im Vakuum von Siliziumdioxid (SiO₂) und metallischem Silizium (Si) eine 10 nm bis 2 µm dicke keramischen Schicht aus SiOₓ niedergeschlagen, wobei x eine Zahl von 1,5 bis 1,8, bevorzugt 1,6 bis 1,8 und insbesondere etwa 1,7 ist.

Bevorzugt wird das Mengenverhältnis von SiO₂ zu Si so eingestellt, dass sich stöchiometrisch ein Sauerstoffmangel von 10 bis 30 %, bezogen auf das reine Oxid im abgedampften Material, ergibt.

Bevorzugt erfolgt das Verdampfen von SiO₂ und Si gemeinsam aus einer einzigen Verdampfungsquelle, d.h. aus einer Mischung von SiO₂ und Si.

Dem SiO₂ können als zu verdampfende Materialien weitere Zusätze wie Al₂O₃, B₂O₃ und MgO in Mengen von bis zu 50 Mol-%, vorzugsweise 5 bis 30 Mol-%, jeweils bezogen auf SiO₂, zugesetzt werden.

Weitere Zusätze, die den zu verdampfenden Materialien zugegeben werden können, sind beispielsweise Al, B und/oder Mg in reiner Form oder als Si-Legierung, in Mengen bis zu 50 Mol-%, vorzugsweise 5 bis 30 Mol-%, jeweils bezogen auf Si.

Das Mengenverhältnis von SiO₂, Al₂O₃, B₂O₃ und MgO zu Si, AI, B und Mg wird beispielsweise so eingestellt, dass sich stöchiometrisch ein Sauerstoffmangel von 10 bis 30%, bezogen auf die Summe der reinen Oxide im abgedampften Material, ergibt.

Das Beschichtungsverfahren wird über die Verdampfungsrate des zu verdampfenden Materials, die Abscheidungsrate auf dem Substrat und die Expositionsdauer des Substrats in der Vakuumkammeratmosphäre derart gesteuert, dass sich eine Schichtdicke für die SiOₓ Beschichtung zwischen 10 nm (Nanometer) bis 2 µm, vorzugsweise 30 nm bis 1 µm und insbesondere 40 nm bis 100 nm ergibt.

Auf der Trägerfolie mit SiOₓ-Beschichtung können, wie vorstehend erwähnt, ein- oder beidseitig weitere UV-transparente Schichten angeordnet werden. Das Aufbringen dieser zusätzlichen Schichten kann beispielsweise durch Kaschieren mit oder ohne Kaschierkleber erfolgen

Der erfindungsgemässe Packstoff eignet sich insbesondere zur Herstellung flexibler Verpackungen wie Folienbeutel sowie als Deckelmaterial zum Aufsiegeln auf Behälter. Ein besonders bevorzugtes Einsatzgebiet liegt in der Verwendung des erfindungsgemässen Packstoffes zur Verpackung von Nahrungs-, Lebens- und Genussmitteln, die im verpackten Zustand durch Bestrahlung mit UV-Licht sterilisiert werden.

| | | Sauerstoffbarriere [cm³/(m² 24h bar)] bei 25°C 50%rH | Wasserdampfbarriere [g/(m² 24h)] bei 25° C 100%rH | UV-Transmission [%] bei 251 nm |
|---|---|---|---|---|
| 1 | oPA (15µm)//PE (50µm) | 40 | 2 | 72 |
| 2 | oPA (15µm)/SiO_{1.7}/PE (50µm) | 0.2 | 0.4 | 65% |
| 3 | oPP (20µm)//PE (50µm) | 1800 | 1.0 | 79% |
| 4 | oPP (20µm)/SiO_{1.7}//PE(50µm) | 3.0 | 0.1 | 75% |
| 5 | PET (12µm)//PE (50µm) | 119 | 3 | 0% |
| 6 | oPA-PVDC | 2.5 | 0.3 | 5% |

Die Überlegenheit des erfindungsgemässen Packstoffes im Vergleich zu heute üblichen Materialien in bezug auf UV-Durchlässigkeit und Barrierewirkung für Wasserdampf und Gase wird durch die in der vorstehenden Tabelle zusammengestellten Messergebnisse der genannten Eigenschaften untermauert.

Die erfindungsgemässen Varianten 2 und 4 zeigen sowohl eine ausgezeichnete UV-Transparenz als auch eine gute Barrierewirkung für Wasserdampf und Sauerstoff. Die ausserhalb des erfindungsgemässen Bereichs liegenden Vergleichsmaterialien 1, 3, 5 und 6 zeigen zumindest bezüglich einer der geforderten Eigenschaften eine erhebliche Verschlechterung.

## Patentansprüche

1. Folienförmiger, für UV-Licht transparenter Packstoff mit Durchtrittssperrwirkung für Wasserdampf und Gase, mit einer Trägerfolie mit einer keramischen Beschichtung aus SiOₓ,
**dadurch gekennzeichnet, dass**
die Trägerfolie eine orientierte Polypropylenfolie (oPP) mit einer 0,5 bis 2 µm dicken Deckschicht aus einem Copolymer von Ethylen und Propylen mit einem Ethylen-Anteil von 1 bis 20 Mol-% ist, bei der Beschichtung aus SiOₓ x eine Zahl von 1,5 bis 1,8 ist und die Dicke der keramischen Schicht 10 nm bis 2 µm beträgt.

2. Packstoff nach Anspruch 1, **dadurch gekennzeichnet, dass** der Ethylen-Anteil 2 bis 5 Mol-% beträgt.

3. Folienförmiger, für UV-Licht transparenter Packstoff mit Durchtrittssperrwirkung für Wasserdampf und Gase, mit einer Trägerfolie mit einer keramischen Beschichtung aus SiOₓ,
**dadurch gekennzeichnet, dass**
die Trägerfolie eine orientierte Polypropylenfolie (oPP) mit einer 0,5 bis 2 µm dicken Deckschicht aus einem Polymer von Ethylvinylalkohol (EVOH) oder aus einem Copolymer von Ethylen und Ethylvinylalkohol ist, bei der Beschichtung aus SiOₓ x eine Zahl von 1,5 bis 1,8 ist und die Dicke der keramischen Schicht 10 nm bis 2 µm beträgt.

4. Folienförmiger, für UV-Licht transparenter Packstoff mit Durchtrittssperrwirkung für Wasserdampf und Gase, mit einer Trägerfolie mit einer keramischen Beschichtung aus SiOₓ,
**dadurch gekennzeichnet, dass**
die Trägerfolie eine biaxial verstreckte orientierte Polyamidfolie (oPA) ist, bei der Beschichtung aus SiOₓ x eine Zahl von 1,5 bis 1,8 ist und die Dicke der keramischen Schicht 10 nm bis 2 µm beträgt.

5. Packstoff nach einem der Ansprüche 1 bis 4, **dadurch gekennzeichnet, dass** die beschichtete Trägerfolie mit wenigstens einer weiteren UV-transparenten Schicht als Siegelschicht oder zur Verbesserung der mechanischen Festigkeit beschichtet ist.

6. Packstoff nach Anspruch 5, **dadurch gekennzeichnet, dass** die beschichtete Trägerfolie und die weitere UV-transparente Schicht über Polyurethankleber miteinander verbunden sind.

7. Verfahren zur Herstellung eines Packstoffes nach einem der Ansprüche 1 bis 6, **dadurch gekennzeichnet, dass** auf die Trägerfolie mittels eines Vakuumdünnschichtverfahrens durch gleichzeitiges Verdampfen im Vakuum von Siliziumdioxid (SiO₂) und metallischem Silizium eine 10 nm bis 2 µm dicke keramische Schicht aus SiOₓ, wobei x eine Zahl von 1,5 bis 1,8 ist, niedergeschlagen wird.

8. Verfahren nach Anspruch 7, **dadurch gekennzeichnet, dass** SiO₂ und Si gemeinsam als Mischung verdampft werden.

9. Verfahren nach Anspruch 7 oder 8, **dadurch gekennzeichnet, dass** den zu verdampfenden Materialien weitere Zusätze, insbesondere Al₂O₃, B₂O₃ und/oder MgO, in Mengen bis zu 50 Mol-%, vorzugsweise 5 bis 30 Mol-%, jeweils bezogen auf SiO₂, zugesetzt werden.

10. Verfahren nach Anspruch 7 oder 8, **dadurch gekennzeichnet, dass** den zu verdampfenden Materialien weitere Zusätze, insbesondere AI, B und/oder Mg in reiner Form oder als Si-Legierung, in Mengen bis zu 50 Mol-%, vorzugsweise 5 bis 30 Mol-%, jeweils bezogen auf Si, zugesetzt werden.

11. Verfahren nach einem der Ansprüche 7 bis 10, **dadurch gekennzeichnet, dass** das Mengenverhältnis von SiO₂ zu Si so eingestellt wird, dass sich stöchiometrisch ein Sauerstoffmangel von 10 bis 30%, bezogen auf das reine Oxid im abgedampften Material, ergibt.

12. Verfahren nach Anspruch 9 und 10, **dadurch gekennzeichnet, dass** das Mengenverhältnis von SiO₂, Al₂O₃ B₂O₃, und MgO zu Si, AI, B und Mg so eingestellt wird, dass sich stöchiometrisch ein Sauerstoffmangel von 10 bis 30%, bezogen auf die Summe der reinen Oxide im abgedampften Material, ergibt.

13. Verfahren nach einem der Ansprüche 7 bis 12, **dadurch gekennzeichnet, dass** die Trägerfolie vor der SiOₓ-Beschichtung einer Plasma-Vorbehandlung unterworfen wird.

14. Verwendung eines Packstoffes nach einem der Ansprüche 1 bis 6 zur Verpackung von Nahrungs-, Lebens- und Genussmitteln, die im verpackten Zustand durch Bestrahlung mit UV-Licht sterilisiert werden.

## Claims

1. Packaging film transparent to UV light with a barrier effect with respect to the passage of water vapour and gases, comprising a carrier film with a ceramic coating consisting of SiOₓ, **characterised in that** the carrier film is an oriented polypropylene film (oPP) with a 0.5 to 2 µm thick top layer consisting of a copolymer of ethylene and propylene with an ethylene content of 1 to 20 mole %, in the coating consisting of SiOₓ, x is a number from 1.5 to 1.8 and the thickness of the ceramic layer is 10 nm to 2 µm.

2. Packaging material according to claim 1, **characterised in that** the ethylene content is 2 to 5 mole %.

3. Packaging film transparent to UV light with a barrier effect with respect to the passage of water vapour and gases, comprising a carrier film with a ceramic coating consisting of SiOₓ, **characterised in that** the carrier film is an oriented polypropylene film (oPP) with a 0.5 to 2 µm thick top layer consisting of a polymer of ethyl vinyl alcohol (EVOH) or of a copolymer of ethylene and ethyl vinyl alcohol, in the coating consisting of SiOₓ, x is a number from 1.5 to 1.8 and the thickness of the ceramic layer is 10 nm to 2 µm.

4. Packaging film transparent to UV light with a barrier effect with respect to the passage of water vapour and gases, comprising a carrier film with a ceramic coating consisting of SiOₓ, **characterised in that** the carrier film is a biaxially oriented polyamide film (oPA), in the coating consisting of SiOₓ, x is a number from 1.5 to 1.8 and the thickness of the ceramic layer is 10 nm to 2 µm.

5. Packaging material according to one of claims 1 to 4, **characterised in that** the coated carrier film is coated with at least one further UV-transparent layer to serve as a sealing layer or to improve mechanical strength.

6. Packaging material according to claim 5, **characterised in that** the coated carrier film and the further UV-transparent layer are joined together by means of polyurethane adhesive.

7. Process for the production of a packaging material according to one of claims 1 to 6, **characterised in that** a 10 nm to 2 µm thick ceramic layer consisting of SiOₓ, where x is a number from 1.5 to 1.8, is deposited on the carrier film by means of thin-film vacuum deposition by the simultaneous evaporation in vacuo of silicon dioxide (SiO₂) and metallic silicon.

8. Process according to claim 7, **characterised in that** SiO₂ and Si are evaporated together as a mixture.

9. Process according to claim 7 or claim 8, **characterised in that** other additives, in particular Al₂O₃ B₂O₃ and/or MgO are added to the materials to be evaporated in quantities of up to 50 mole %, preferably 5 to 30 mole %, in relation to SiO₂ in each case.

10. Process according to claim 7 or claim 8, **characterised in that** other additives, in particular Al, B and/or Mg are added to the materials to be evaporated in pure form or in the form of an Si alloy in quantities of up to 50 mole %, preferably 5 to 30 mole %, in relation to Si in each case.

11. Process according to one of claims 7 to 10, **characterised in that** the proportion of SiO₂ to Si is set so as to result stoichiometrically in an oxygen deficit of 10 to 30 % in relation to the pure oxide in the evaporated material.

12. Process according to claims 9 and 10, **characterised in that** the proportion of SiO₂, Al₂O₃, B₂O₃ and MgO to Si, Al, B and Mg is set so as to result stoichiometrically in an oxygen deficit of 10 to 30 % in relation to the sum of the pure oxides in the evaporated material.

13. Process according to one of claims 7 to 12, **characterised in that** the carrier film is subjected to plasma pre-treatment before being coated with SiOₓ.

14. Use of a packaging material according to one of claims 1 to 6 for packaging foodstuffs and products such as tea, coffee and tobacco sterilised by irradiation by UV light in the packaged state.

## Revendications

1. Matériau d'emballage en forme de feuille, transparent à la lumière UV, présentant un effet de barrière au passage de la vapeur d'eau et des gaz, doté d'une feuille de support présentant un revêtement céramique en SiOₓ, **caractérisé en ce que** la feuille de support est une feuille de polypropylène orienté (oPP) dotée d'une couche de recouvrement d'une épaisseur de 0,5 à 2 µm, en un copolymère d'éthylène et de propylène présentant une teneur en éthylène de 1 à 20 % en moles, et dans le revêtement en SiOₓ, x représente un nombre de 1,5 à 1,8, l'épaisseur de la couche céramique étant de 10 nm à 2 µm.

2. Matériau d'emballage selon la revendication 1, **caractérisé en ce que** la teneur en éthylène est de 2 à 5 % en moles.

3. Matériau d'emballage en forme de feuille, transparent à la lumière UV, présentant un effet de barrière au passage de la vapeur d'eau et des gaz, doté d'une feuille de support présentant un revêtement céramique en SiOₓ, **caractérisé en ce que** la feuille de support est une feuille de polypropylène orienté (oPP) dotée d'une couche de recouvrement d'une épaisseur de 0,5 à 2 µm en un polymère d'alcool éthylvinylique (EVOH) ou en un copolymère d'éthylène et d'alcool éthylvinylique, et dans le revêtement en SiOₓ, x représente un nombre de 1,5 à 1,8, l'épaisseur de la couche céramique étant de 10 nm à 2 µm.

4. Matériau d'emballage en forme de feuille, transparent à la lumière UV, présentant un effet de barrière au passage de la vapeur d'eau et des gaz, doté d'une feuille de support présentant un revêtement céramique en SiOₓ, **caractérisé en ce que** la feuille de support est une feuille de polyamide orienté (oPA) étirée biaxialement, et dans le revêtement en SiOₓ, x représente un nombre de 1,5 à 1,8, l'épaisseur de la couche céramique étant de 10 nm à 2 µm.

5. Matériau d'emballage selon l'une des revendications 1 à 4, **caractérisé en ce que** la feuille de support revêtue est revêtue d'au moins une autre couche transparente aux UV qui sert de couche de scellement ou d'amélioration de la résistance mécanique.

6. Matériau d'emballage selon la revendication 5, **caractérisé en ce que** la feuille de support revêtue et l'autre couche transparente aux UV sont reliées l'une à l'autre à l'aide d'un adhésif au polyuréthane.

7. Procédé de fabrication d'un matériau d'emballage selon l'une des revendications 1 à 6, **caractérisé en ce qu'**au moyen d'un procédé de dépôt de couche mince sous vide accompagné d'une vaporisation sous vide de dioxyde de silicium (SiO₂) et de silicium métallique, on dépose sur la feuille de support une couche céramique d'une épaisseur de 10 nm à 2 µm de SiOₓ, x représentant un nombre de 1,5 à 1,8.

8. Procédé selon la revendication 7, **caractérisé en ce que** le SiO₂ et le Si sont vaporisés ensemble en mélange.

9. Procédé selon la revendication 7 ou 8, **caractérisé en ce que** l'on ajoute au matériau à vaporiser d'autres additifs, en particulier Al₂O₃, B₂O₃ et/ou MgO, en quantités pouvant attendre atteindre 50 % en moles, de préférence de 5 à 30 % en moles, chaque fois par rapport au SiO₂.

10. Procédé selon la revendication 7 ou 8, **caractérisé en ce que** l'on ajoute au matériau à vaporiser d'autres additifs, en particulier Al, B et/ou Mg, sous forme pure ou en alliage avec Si, en quantités pouvant atteindre 50 % en moles, de préférence de 5 à 30 % en moles, chaque fois par rapport à Si.

11. Procédé selon l'une des revendications 7 à 10, **caractérisé en ce que** le rapport entre les quantités de SiO₂ et de Si est ajusté de manière à obtenir un déficit stoechiométrique en oxygène de 17 à 30 % par rapport à l'oxyde pur dans le matériau vaporisé.

12. Procédé selon les revendications 9 et 10, **caractérisé en ce que** le rapport entre les quantités de SiO₂, Al₂O₃, B₂O₃ et MgO et celles de Al, B et Mg est ajusté de manière à obtenir un déficit stoechiométrique en oxygène de 10 à 30 % par rapport à la somme des oxydes purs dans le matériau vaporisé.

13. Procédé selon l'une des revendications 7 à 12, **caractérisé en ce qu'**avant le revêtement par SiOₓ, la feuille de support est soumise à un prétraitement par plasma.

14. Utilisation d'un matériau d'emballage selon l'une des revendications 1 à 6 pour l'emballage de produits alimentaires ou de denrées de luxe qui sont stérilisés par irradiation par une lumière UV après avoir été emballés.
